# EUROPEAN PATENT SPECIFICATION

(11) **EP 0 910 251 B1**
(45) Date of publication and mention of the grant of the patent: **31.07.2002**
(21) Application number: 96911941.1
(22) Date of filing: 02.05.1996
(51) Int. Cl.: A22B 5/20

(54) **APPARATUS FOR THE SPLITTING OF THE SPINE OF A CARCASS INTO TWO HALVES ALONG THE SYMMETRICAL PLANE**
VORRICHTUNG ZUM ZERTEILEN DER WIRBELSÄULE EINES SCHLACHTTIERKÖRPERS IN ZWEI HÄLFTEN ENTLANG DER SYMMETRIEACHSE
APPAREIL SERVANT A DECOUPER LA COLONNE D'UNE CARCASSE EN DEUX MOITIES LE LONG DE SON AXE DE SYMETRIE

(30) Priority: 05.05.1995 DK 52295
(43) Date of publication of application: 28.04.1999
(73) Proprietor: SFK-Danfotech A/S, 9100 Aalborg (DK)
(72) Inventor: CHRISTENSEN, Per, DK-8600 Silkeborg (DK); HVID, Niels, DK-2950 Vedbaek (DK)
(74) Representative: Larsen, Hans Ole
(86) International application number: DK9600204
(87) International publication number: WO9634532

(56) References cited:
- DK-B- 159 579
- SE-C- 225 078
- US-A- 4 507 822
- US-A- 4 970 756

## Description

### BACKGROUND OF THE INVENTION

The invention relates to an apparatus for the splitting of the spine of a carcass into two halves along the symmetrical plane of the carcass, and comprising a meat axe with associated movement arrangement, support elements for the carcass which can follow the axe on the spine side and the belly side of the carcass below the cutting point, spreading elements are provided for the carcass halves, said elements being arranged at a distance from, at and on each side of the axe above the working area of the axe.

Such an apparatus is known from DK B 159, 579, EP A1 187, 064 and US patent 4, 507, 822.

The present invention is intended especially for use in connection with the slaughtering of pigs, but other applications within the slaughtering sector are naturally also possible.

With the known technique, two different methods and types of apparatus are used, i.e. sawing with a rotating circular saw and splitting with a machine-driven axe. The choice of method depends on which market and herewith which type of product the abattoir is required to deliver. With the sawing method, a grey cut surface in the spinal column is obtained due to the sawdust, which for certain markets is of no significance since the bones are subsequently removed. In Other markets it is important that the cut surface appears red, and here the splitting is carried out with an axe.

With the known types of apparatus it is not immediately possible to change between a sawing method and a chopping method for the splitting of the carcasses.

### ADVANTAGES OF THE INVENTION

The characteristic feature of the apparatus according to the invention is that the meat axe with the movement arrangement and the support elements are mounted on a carriage which is displaceable in vertical and horizontal direction and where the spreading elements are arranged on and substantially immovable in relation to the carriage, the carriage is detachably secured to a vertically displaceable holder, and cables and hoses for the operation of the movement arrangement and possibly other functions of the carriage are connected to the stationary part of the apparatus by means of separable connections and that the carcass is fixed between the supporting elements.

The spreading elements, which during the chopping operation pull the halves of the carcass away from each other above the cutting point, ensure that the carcass is fixed in the same place from cut to cut, while at the same time the carcass is prevented from springing back when the blade of the axe is lifted between each cut. Since the spreading are positioned at a distance from the blade of the axe, the blade is left free, as is also the case with the insides of the spreading elements when the parts are to be hosed down between each operation. All of the moving parts of the splitting apparatus can thus be collected in a replaceable carriage, and the apparatus is simplified. With the detachable fixture of the carriage and with the separate connections, it is possible to change between sawing operation and a chopping operation in just a few minutes. The same machine can thus be used for different product types, and the replacing of a cutting apparatus with a sawing apparatus and vice versa can be effected without the work being delayed to any significant degree.

In order to achieve a sufficient precise control of the carcass with simple means, it is preferred that the support element on the belly side is configured as disclosed in claim 2. The parallel rods will hereby effect control along the vertabrae in the spinal column. A preferred embodiment of the support elements for the belly side is disclosed in claim 3. Free ends in the feeding direction of the support elements are hereby avoided, and which could otherwise catch in the carcass during the work process.

As disclosed in claim 4, it is preferred to let the free end of the axe be housed in a guide in the carriage. The free end is thus controlled during the strokes, and an optimally precise cut is achieved.

### THE DRAWING

A preferred embodiment of the invention will now be described in more detail with reference to the drawing, where
fig. 1 shows an apparatus for the splitting of a carcass seen from the side,
fig. 2 shows a removable carriage with a machine-driven meat axe seen from the side,
fig. 3 shows movable parts in the carriage and guide rollers,
fig. 4 shows the same as in fig. 3, but without support rollers and seen as an X-ray drawing,
fig. 5a shows a section along the line A in fig. 3,
figs. 5b and 5c show the meat axe with associated spreading elements seen from the side and from above respectively,

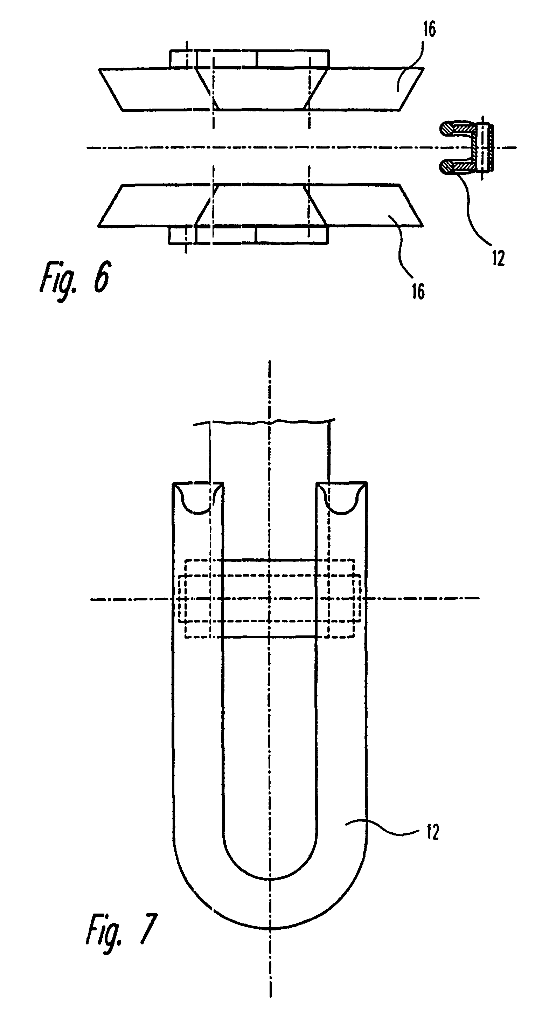

fig. 6 shows a section along the line B in fig. 3, and
fig. 7 shows a support element seen along the line c-c in fig. 4.

### DESCRIPTION OF THE EXAMPLE EMBODIMENT

An apparatus for the splitting of pig carcasses is basically configured as a known splitting machine of the trademark Danfotech/Nutridan. The known splitting machine is equipped with a circular saw, but the apparatus according to the invention is at this point changed and is instead provided with a carriage with a machine-driven meat axe. The configuration of the apparatus and its equipment otherwise corresponds to the known machine. This thus applies to the feeding elements for the pig carcasses, the positioning elements, servo-control etc.

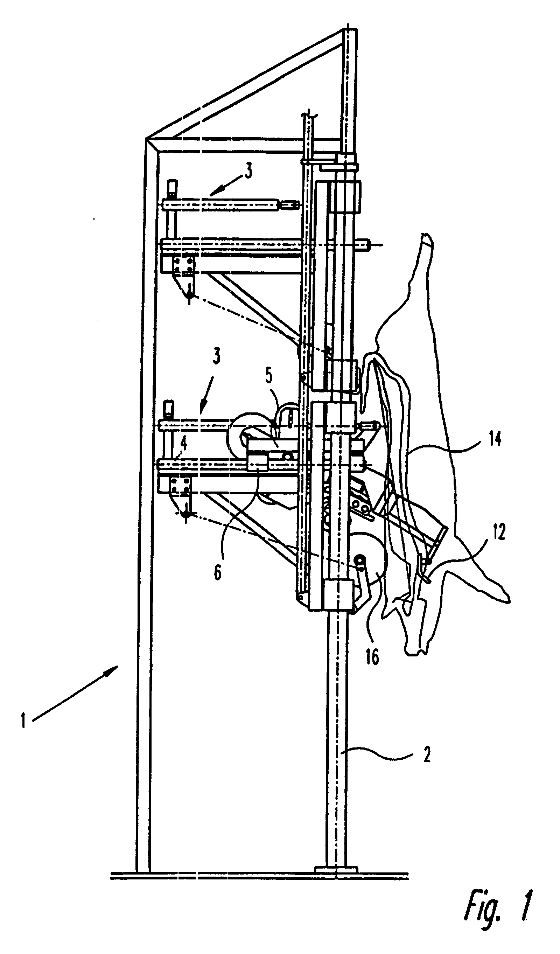

On the apparatus frame 1 there is integrated a vertical guide column 2 on which the carriage 3 can be moved up and down. The carriage can also be moved in the horizontal direction along horizontal guides 4. The machine-driven axe with associated balance and driving elements is supported by a frame 5 which rests on guides 6 on the guides 4. In fig. 1 the carriage 3 is shown in two different positions, the uppermost of which is shown without axe and drive mechanisms.

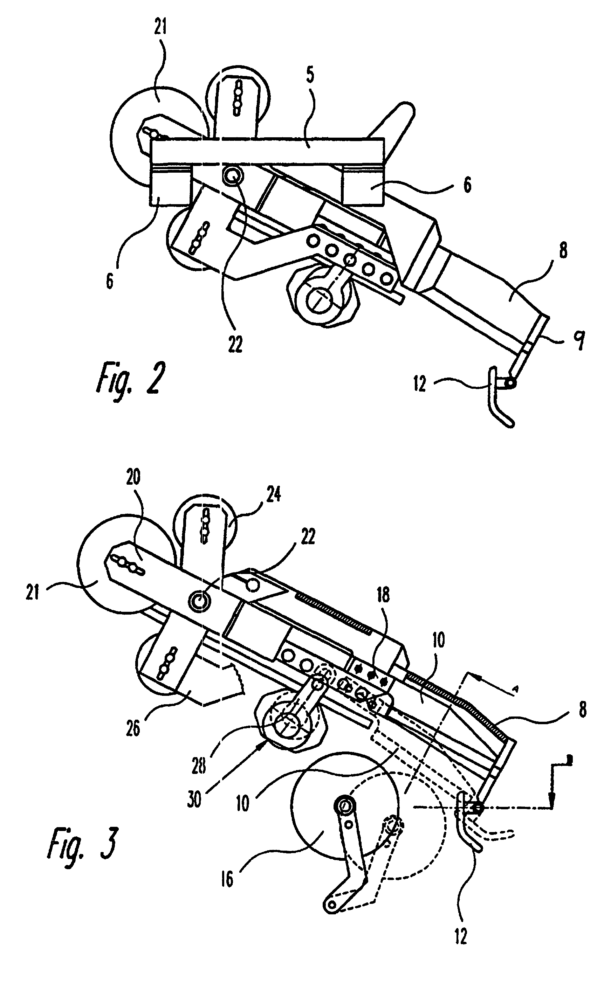

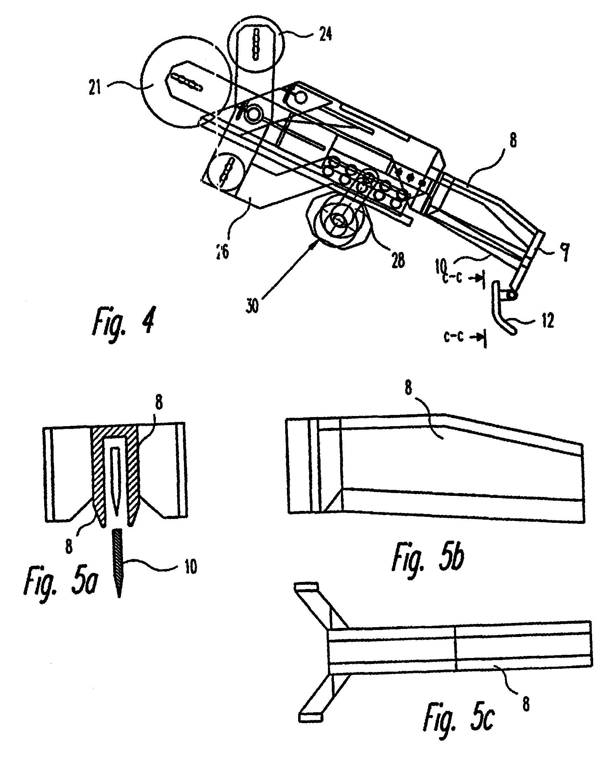

In figs. 2-4 are shown the new parts in the carriage according to the invention. The figure 8 indicates a distending or spreading element which surrounds the axe 10 on three sides in the uppermost position of the axe, see also fig. 5a. The spreading element is provided outermost with an end part 9 containing a not-shown guide in which the free end of the axe 10 is suspended and can hereby be prevented from swinging laterally. In the end part 9 there is provided a suspension for a combined guide and support element 12 in the form of parallel runners which are arranged to guide along the spine 14 of the carcass.

The outer sides of the spreading arrangement 8, which surrounds the axe 10, are on one side tapered in towards the axe 10 as shown in fig. 5a. Moreover, there is a clearance between the axe 10 and the inner side of the parallel inner sides of the spreading arrangement. The clearance can typically be 10 mm in order to ensure that bone-dust and shreds of meat can be hosed away between each working operation.

To control the pig carcass in relation to the axe, a pair of conical rollers 16 are suspended in a pivotable manner on the carriage. The rollers 16 are pre-loaded in the direction towards the element 12, so that the carcass is always fixed between the supporting elements 12,16. Together, the conical shape of the rollers 16 form a concave contact surface, so that a centring of the carcass in relation to the axe 10 also takes place on the outer side. The rollers 16 follow the movement of the carriage 3 when this is moved downwards.

The spreading element 8 is secured to the carriage 3 and is thus immovable in relation hereto. The blade of the axe 10 is connected via its shaft to a forked rear part 20 where a counterweight 21 is suspended in the fork. The fork is suspended in a bearing 22 whereby it can pivot in relation to the frame 5 of the carriage. A second, movable counterweight 24 is suspended in the same bearing and between the arms of the fork. Both the shaft 18 and an intermediate arm 26 for the counterweight 24 are connected to two separate connecting rods 28 arranged on an eccentric 30, but mutually displaced 180° in the direction of rotation. There can hereby be effected an equalisation of the accelerations in the cutting movements of the axe 10. The eccentric 30 is preferably driven by a hydraulic motor. The shaft 18 is provided with a number of spaced holes with the view to being able to adjust the stroke length of the axe 10.

The meat axe 10 is arranged in an inclined manner and approx. 30° in relation to the horizontal, so that the cutting movement takes place in towards the rollers 16. There is hereby achieved a secure contact surface for the axe strokes during the splitting of the spinal cord.

In fig. 5a the meat axe 10 is seen in two different positions. In the lower position the spine will be split at the greatest distance from the spreading arrangement 8. When the blade of the axe 10 is retracted to the upper position, the spreading arrangement will prevent the halves of the carcass from springing back, while at the same time the bottom of the cut is held distended. It is thus also ensured that the next cut is effected precisely on top of the first, and zigzag-like patterns in the finished product are hereby avoided in the finished product.

The carriage 3 is configured with compressed-air and hydraulic connections, so that the frame 5 can be slid off the guides 4 and an alternative splitting apparatus in the form of the known circular saw can be mounted in a few minutes. The rollers 16 remain on the vertically movable part of the carriage.

It is preferred that the direction for the cutting movement has an angle of approx. 30° in relation to the horizontal. The support elements on the belly side, i.e. the runners 12, have a distance of 30-40 mm between them. The rollers 16 have a diameter of 300 mm in order to achieve a suitable control of the carcass. The angle which is formed at the peripheries of the rollers 16 is in the order of 110°.

The function of the apparatus is as follows: In the start position, the carriage 3 is raised to the upper position so that a carcass can pass under the carriage, in that the frame 5 is drawn back to its inner position in the horizontal direction. Thereafter, the carriage 3 and the frame 5 are moved outwards in the horizontal direction until the axe with spreading elements 8 is between the hind legs of the carcass. The lowermost support elements 12 now secure a grip in the rearmost part of the spine, and in that the carcass is drawn in by means of the runners 12 and is clamped up against the rollers 16 by virtue of the pivotable nature of the rollers 16, the machine axe is moved down through the spine. The vertical movement is controlled by compressed-air cylinders. The splitting is carried out right down to the tip of the carcass snout. Hereafter, the carriage 3 can be fed back to its top position, the apparatus can be cleaned with hot water and the two halves of the carcass can be led away.

## Claims

1. Apparatus for the splitting of the spine (14) of a carcass in two halves along the symmetrical plane, and comprising a meat axe (10) with associated movement arrangement, support elements (12, 16) for the carcass which can follow the axe (10) on the spine side and the belly side of the carcass below the cutting point, spreading elements (8) are provided for the carcass halves, said elements (8) being arranged at a distance from, at and on each side of the axe (10) above the working area of the axe (10), **characterized in that** the meat axe (10) with the movement arrangement and the support elements (12, 16) are mounted on a carriage (3) which is displaceable in vertical and horizontal direction and where the spreading elements (8) are arranged on and substantially immovable in relation to the carriage (3), the carriage (3) is detachably secured to a vertically displaceable holder, and cables and hoses for the operation of the movement arrangement and possibly other functions of the carriage (3) are connected to the stationary part of the apparatus by means of separable connections and that the carcass is fixed between the supporting elements (12, 16).

2. Apparatus according to claim 1, where the support element (12) on the belly side is suspended in a pivotable manner, **characterized in that** the support element (12) on the belly side consists of two parallel rod elements arranged at a distance from each other, and which are pivotably suspended on a part of the carriage (3) arranged at the free end of the axe (10).

3. Apparatus according to one of the claim 2, **characterized in that** the rod elements (12) are configured from a round bar which is bent and arranged with the bend in the feeding direction.

4. Apparatus according to any of the claims 1-3, where the axe (10) with a shaft (18) is suspended in the movement arrangement, **characterized in that** the other end of the axe (10) is suspending a guide in the carriage (3).

## Patentansprüche

1. Vorrichtung zum Spalten des Rückgrats (14) einer Karkasse in zwei Hälften entlang der Symmetrieebene, mit einem Fleischbeil (10) mit zugeordneter Bewegungsanordnung, und Halteelementen (12, 16) für die Karkasse, die dem Beil (10) auf der Rückgrat-Seite und der Bauchseite der Karkasse unterhalb des Schnittpunkts folgen können, wobei für die Karkassenhälften Spreizelemente (8) vorgesehen sind, die mit einem Abstand von, bei und auf jeder Seite des Beils oberhalb des Arbeitsbereichs des Beils (10) angeordnet sind,
**dadurch gekennzeichnet, daß** das Fleischbeil (10) mit der Bewegungsanordnung und den Halteelementen (12, 16) auf einem Wagen (3) angebracht sind, der in vertikaler und horizontaler Richtung verschiebbar ist, wobei die Spreizelemente (8) auf dem Wagen (3) und im wesentlichen unbeweglich zu diesem angeordnet sind, der Wagen (3) lösbar mit einem vertikal verschiebbaren Halter verbunden ist und Kabel und Schläuche für den Betrieb der Bewegungsanordnung und möglicher anderer Funktionen des Wagens (3) mittels trennbarer Verbindungen mit dem stationären Teil der Vorrichtung verbunden sind, und daß die Karkasse zwischen den Halteelementen (12, 16) fixiert ist.

2. Vorrichtung nach Anspruch 1, wobei das Halteelement (12) auf der Bauchseite schwenkbar aufgehängt ist, **dadurch gekennzeichnet, daß** das Halteelement (12) auf der Bauchseite aus zwei parallelen Stangenelementen besteht, die mit Abstand voneinander angeordnet sind und schwenkbar an einem Teil des Wagens (3) am freien Ende des Beils (10) aufgehängt sind.

3. Vorrichtung nach Anspruch 2, **dadurch gekennzeichnet, daß** die Stangenelementen (12) aus einem runden Stab gebildet sind, der gebogen ist und mit der Biegung in Zuführrichtung angeordnet ist.

4. Vorrichtung nach einem der Ansprüche 1 bis 3, wobei das Beil (10) mit einem Schaft (18) in der Bewegungsanordnung aufgehängt ist, **dadurch gekennzeichnet, daß** das andere Ende des Beils (10) mit einer Führung im Wagen (3) zusammenhängt.

## Revendications

1. Appareil pour séparer la colonne (14) d'une carcasse en deux moitiés le long d'un plan de symétrie, et comprenant un axe de viande de boucherie (10) avec un arrangement de mouvement associé, des éléments de support (12, 16) pour la carcasse qui peuvent suivre l'axe (10) sur le côté de la colonne, et le côté ventre de la carcasse, sous le point de découpe, des éléments de séparation (8) sont prévus pour les moitiés de carcasse, lesdits éléments (8) étant disposés à distance et de chaque côté de l'axe (10) au-dessus de la zone de travail de l'axe (10), **caractérisé en ce que** l'axe (10), avec l'arrangement de mouvement et les éléments de support (12, 16), sont montés sur un chariot (3) déplaçable en direction verticale et horizontale et où les éléments de séparation (8) sont disposés sur et sensiblement immobiles par rapport au chariot (3), le chariot (3) étant fixé de manière amovible sur un écarteur déplaçable verticalement, et des câbles et tubes pour le fonctionnement du dispositif de mouvement et pour d'éventuelles autres fonctions, du chariot (3), sont reliés à la partie fixe de l'appareil, au moyen de connexions amovibles, et **en ce que** la carcasse est fixée entre les éléments de support (12, 16).

2. Appareil selon la revendication 1, **caractérisé en ce que** l'élément de support (12) du côté entrailles est suspendu de manière pivotante, et **en ce que** l'élément de support (12) du côté entrailles consiste en deux tiges parallèles disposées à distance l'une de l'autre, et qui sont suspendues de manière pivotante sur une partie du chariot disposée à l'extrémité libre de l'axe (10).

3. Dispositif selon la revendication 2, **caractérisé en ce que** les éléments de tiges (12) sont réalisés à partir d'une barre ronde pliée et conçue avec la pliure dans la direction d'alimentation.

4. Dispositif selon l'une des revendications 1 à 3, **caractérisé en ce que** l'axe (10), avec un arbre (18), est suspendu dans l'arrangement de mouvement, et **en ce que** l'autre extrémité de l'axe (10) possède un guide suspendu dans le chariot (3).
